# EUROPEAN PATENT APPLICATION

(11) **EP 4 414 842 A1**
(43) Date of publication of application: **14.08.2024**
(21) Application number: 23213824.8
(22) Date of filing: 01.12.2023
(51) Int. Cl.: G06F 9/50, G06F 15/78, G06F 3/06

(54) **METHOD AND APPARATUS FOR OFFLOADING MEMORY/STORAGE SHARDING FROM CPU RESOURCES**

(30) Priority: 09.02.2023 US 202318107980
(71) Applicant: INTEL Corporation, Santa Clara, CA 95054 (US)
(72) Inventor: AGRAWAL, Anurag, Santa Clara, 95051 (US)
(74) Representative: Rummler, Felix

(57) **Abstract**

A computing system is described. The computing system includes a network, a memory pool coupled to the network, a storage pool coupled to the network, a plurality of central processing units (CPUs) coupled to the network, and circuitry. The circuitry is to receive a memory or storage access request from one of the CPUs; divide the access request into multiple access requests; cause the multiple access requests to be sent to the memory pool or storage pool over the network; receive respective multiple responses to the multiple access requests that were sent to the logic circuitry by the memory pool or storage pool over the network; construct a response to the access request from the respective multiple responses; and, send the response to the CPU.

## Description

### BACKGROUND OF THE INVENTION

As memory and/or storage capacity of high performance computing systems continues to expand, CPU processors are becoming increasingly burdened accessing memory and/or storage. As such, system designers are motivated to offload memory/storage accessing schemes from the system's CPUs.

### BRIEF DESCRIPTION OF THE DRAWINGS

Fig. 1 depicts a high performance computing system;
Fig. 2 depicts an improved high performance computing system;
Fig. 3 depicts a network node for the improved high performance computing system of Fig. 2;
Figs 4a and 4b depict partitioned memory and storage pools;
Fig. 5 depicts another high performance computing system;
Figs. 6a and 6b depict an IPU.

### DETAILED DESCRIPTION

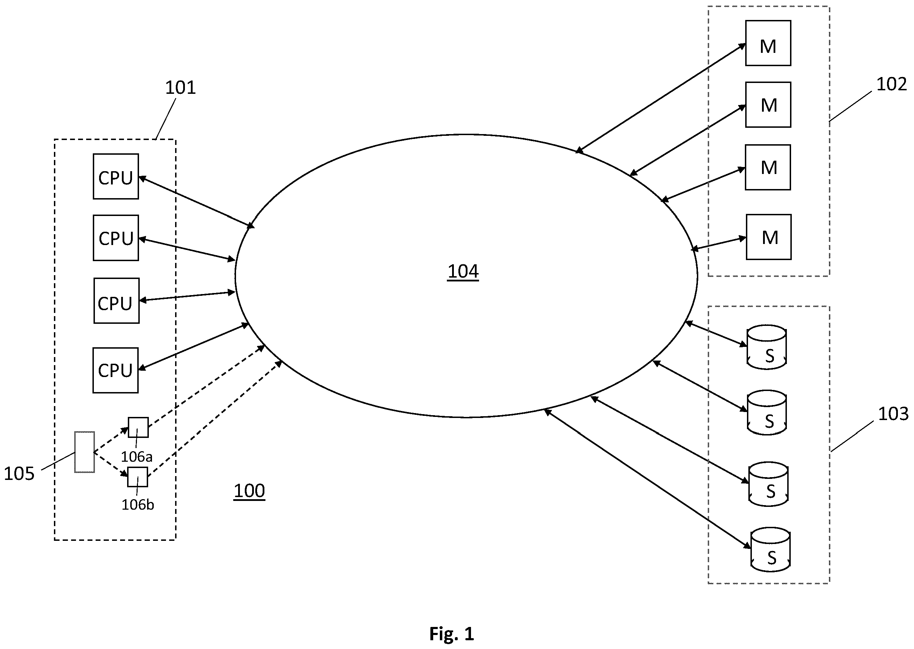

Fig. 1 shows a high level view of a high performance computing system 100 such as a disaggregated rack mounted computing system having separate, rack mountable CPU units 101, memory units 102 and mass storage units 103 that are communicatively coupled through a network 104. The CPU units 101 execute the computing system's software and frequently request data from the memory and/or storage units 102, 103.

Particularly in the case of a high performance computing system, the size of the data accesses are becoming larger and larger. For example, whereas units of data that are fetched by a CPU unit ("CPU") from a memory unit ("M") are traditionally only 64 bytes (64B) or less (e.g., 8B, 16B, 32B), by contrast, with the increasing performance of the CPU units, the units of data are expanding in size (e.g., 128B, 256B, etc.). Similarly, whereas units of data that are fetched/stored from/to a storage unit ("S") are traditionally only 4 kilobytes (4KB), by contrast, such units of data could likewise expand in size (e.g., 8KB, 16KB, etc.).

Such units of data in memory or storage are commonly broken down ("sharded") by the CPUs 101 before being submitted to the network 104 and physically stored in a respective memory or storage unit 102, 103. For example, when a 128B unit of data 105 is written by a CPU into memory 102, the 128B unit of data 105 is sharded (divided) by the CPU into two 64B units of data 106a,b which are then submitted to the network 104 and stored in memory 102 as separate items of data. Among other possible motivations, sharding helps improve the performance of the memory 102 from the perspective of the CPU 101. Here, it is conceivable that the two 64B units of data 106a,b are stored concurrently in their respective memory units and thus the write operation completes in the amount of time needed to store only 64B of data. By contrast, without sharding, the write operation would complete in the amount of time needed to sequentially store 128B of data. Data that is stored in the storage units 103 can also be sharded for similar reasons.

A problem, however, is the amount of overhead that is performed by a CPU unit to implement sharding. Specifically, upon a write operation, a CPU unit: 1) oversees the physical sharding of the larger unit of data; 2) manipulates the single address of the larger unit of data into multiple addresses (one for each shard); and, 3) submits the different shards to the network 104 for delivery to their respective memory/storage units. For a read operation the CPU: 1) generates the multiple respective addresses for the different shards from the single address of the larger unit of data; 2) sends multiple read requests into the network 104 (one for each shard) for delivery to the different memory/storage units where the shards are kept; and 3) merges the shards upon their reception at the CPU unit to form the complete (full sized) unit of data.

The performance of all of the processes by the CPU unit amounts to significant overhead and overall inefficiency of writing/reading sharded data.

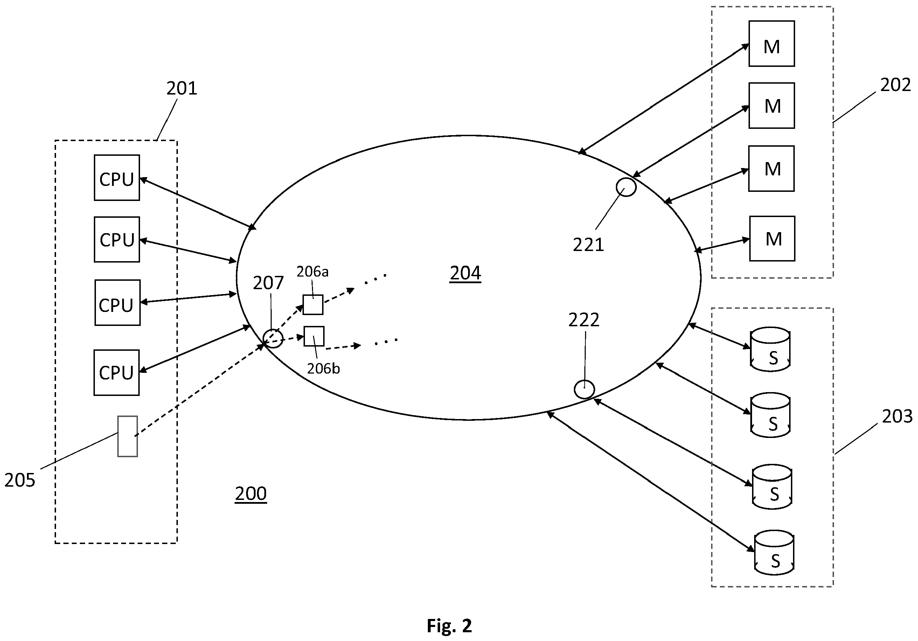

A solution, as observed in Fig. 2, is to perform the above described sharding operations in the network 204 rather than within the CPU units 201. Here, as observed in Fig. 2, for a write operation, a CPU unit simply issues a write request for a full sized, larger unit of data 205 to the network 204. Intelligence 207 within the network 204 near/at the network edge where the write request is received intercepts the request and: 1) shards the larger unit of write data 205 into smaller units of write data 206a,b; 2) manipulates the single address of the larger unit of data 205 into multiple addresses (one for each shard 206a,206b); and 3) sends the different shards 206a, 206b deeper into the network 204 to their different respective memory/storage locations. Because the network 204 performs these write processes rather than the CPU unit that issued the write request, the CPU unit is freed-up to perform other operations that, e.g., increase the performance of the CPU unit from the perspective of the users/customers of the software that the CPU unit executes.

For a read operation, a requesting CPU unit sends a read request into the network 204 for the larger data unit by specifying its single address. The intelligence 207 within the network 204 manipulates the single address into the multiple addresses that identify where the shards are kept and sends corresponding read requests deeper into the network 204 toward the memory/storage units that keep the shards. Upon reception of the shards, the intelligence 207 merges them into a full size data unit. The full sized data unit is then emitted from the network 204 to the CPU unit that requested it.

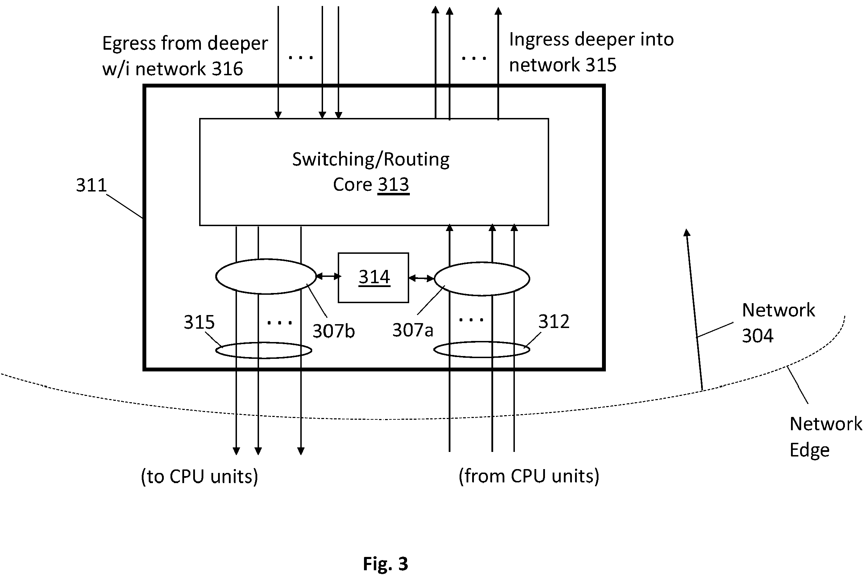

Fig. 3 shows a network node 311 such as a switch or router that is positioned, e.g., as an edge component of the network 204 of Fig. 2. That is, network node 311 is positioned in the topography of the network 304 at or close to the edge of the network where CPU units issue write/read memory/storage access requests into the network 304. As observed in Fig. 3, inbound traffic received from the network edge (such as write/read requests for full sized data units sent by CPU units into the network 304) are sent along one of the ingress paths 312 toward a switch/routing core 313. Intelligence 307a snoops the inbound traffic for a write/read memory/storage request for a full sized data unit. Upon the intelligence 307a observing such a request, the intelligence 307a extracts the request from inbound path and converts the request into the appropriate number of shard requests.

In particular, in the case of a write request, the intelligence 307a performs a lookup based on the incoming request's single address or portion thereof (referred to as a base address) with a preconfigured table 314 that identifies which memory/storage addresses are to be sharded (table 314 can be implemented with memory and/or storage within and/or made accessible to the network node 311). Here, for example, some requests that are sent into the network 304 from a CPU unit employ sharding whereas others do not (e.g., as just one example, memory is sharded but storage is not, thus, requests directed to memory are sharded but requests directed to storage are not sharded). Here, table 314 identifies which memory/storage addresses (and/or address ranges) are to be sharded. Table 314 can be configured, e.g., as part of the bring-up of the computing system and the configuration of the computing system's memory and/or storage.

If the write request's address does not correspond to a request that is to be sharded, the intelligence 307a simply allows the request to pass to the node's switching/routing core 313. By contrast, if the write request's address corresponds to a request that is to be sharded, the intelligence: 1) records in the table 314 that there is an in-flight sharded write request for the request's address that also identifies the requesting CPU; 2) physically separates the write data into smaller shards; 3) constructs a respective write request for each of the shards which includes constructing a respective unique address for each shard from the request's address; and then, 4) sends the multiple sharded write requests along the ingress path to the switch/routing core 313. The switch/routing core 313 then directs each of the multiple write requests over an appropriate ingress path deeper into the network 315 for storage.

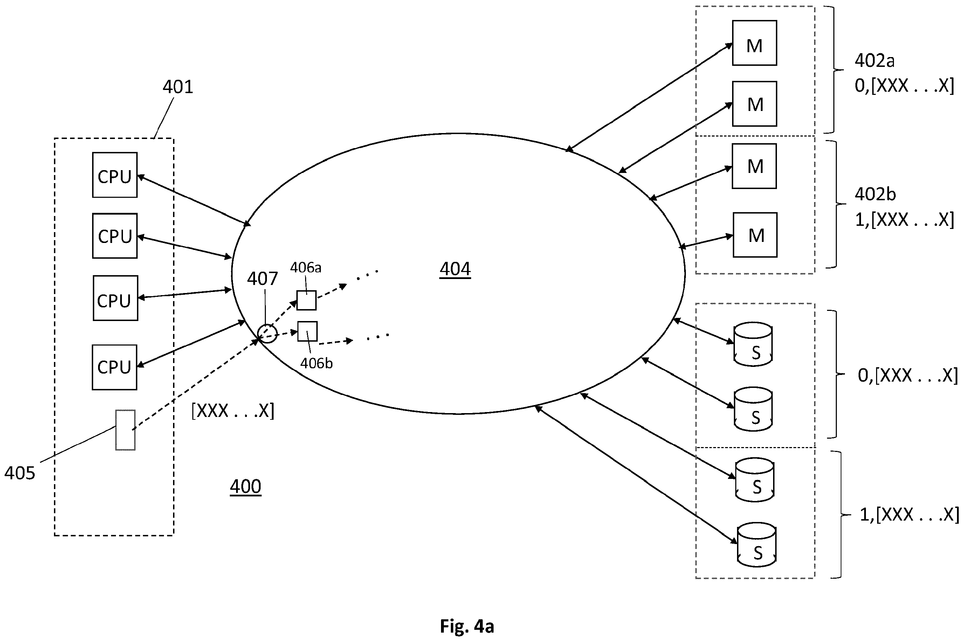

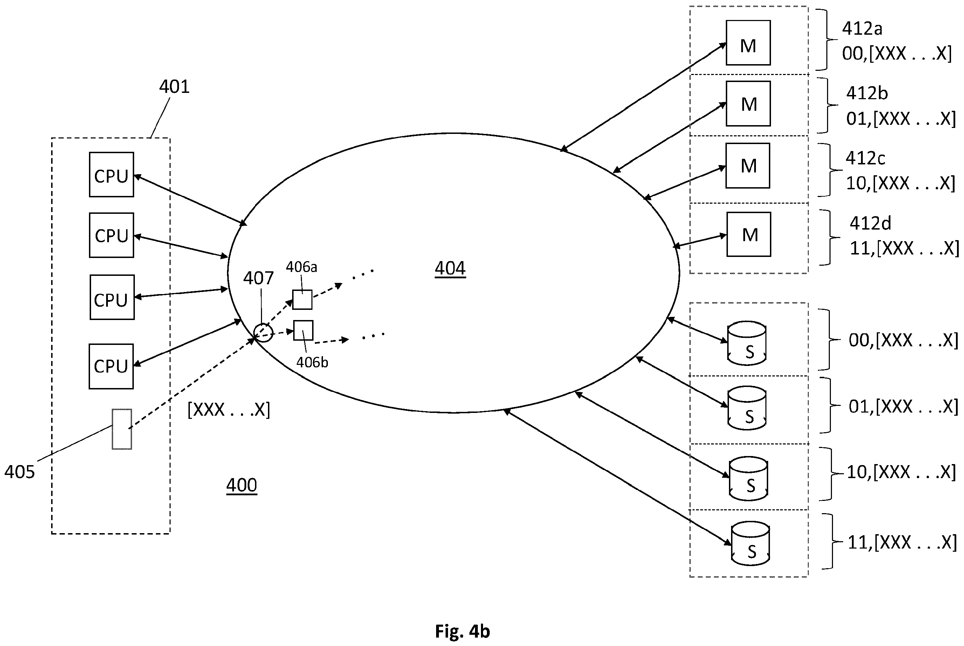

According to an embodiment, referring to Figs. 4a and 4b, memory/storage resources are logically partitioned into a number of groups that correspond to the number of shards per memory/storage request. For example, if memory/storage requests are to be sharded into two shards, then, there are two logical partitions of memory/storage resources. By contrast, if memory/storage requests are to be sharded into four shards, then, there are four logical partitions of memory/storage resources, etc.

Here, in the case of disaggregated computing, the memory/storage addresses that the CPU units use to refer to particular units of data are used as (or converted into) network destination addresses. By so doing, each memory/storage request can be routed across the network to a particular rack mountable memory/storage unit that is coupled to the network, and then to a particular memory/storage location within that memory/storage unit.

Fig. 4a shows logical partitioning for an implementation where memory/storage requests are to be sharded into two separate shards. By contrast, Fig. 4b shows logical partitioning where memory/storage requests are to be shared into four separate shards. Here, when constructing requests for multiple shards from a single request received from a CPU unit, the memory/storage address of the request is appended with an extra field of information where the field is different for each shard and identifies a different partition of the memory/storage resources.

For example, in the example of Fig. 4a where there are two shards per request, a request sent from a CPU unit having address [XXX ... X] is converted into two requests having address [0,[XXX ... X]] and [1,[XXX ... X]]. The leading bit 0 in the first of these addresses directs a first shard request to the first logical partition 402a whereas the leading bit 1 in the second of these addresses directs a second shard request to the second logical partition 402b. The example of Fig. 4b operates similarly except that there are two leading bits to construct four different addresses for the four shards that each point to a different one of the four different logical partitions 41 1a-d. The discussion above only refers to memory partitions but the same approach can be used for storage partitions as indicated in Figs. 4a and 4b.

Thus, referring back to the example of Fig. 3, in the case of the write request, when constructing the different write requests for the different shards, the intelligence 307a appends the request's base address [XXX... X] with different additional bit(s) and then forwards the different write requests with their respective shard data to the switching/routing core 313. The switching/routing core 313 and any switching/routing cores deeper within the network 304 are configured to route the different addresses to the different logical partitions as described just above.

Upon receipt, each logical partition stores its assigned shard. In various embodiments, each logical partition confirms its successful reception and storage of its respective shard by sending an acknowledgment to the issuing node 311. When confirmation has been received from all of the partitions, the intelligence closes the record in table 314 (the write request is no longer in flight) and uses the identity of the requesting CPU recorded in table 314 for the request to send a completion acknowledgment to the requesting CPU that identifies the address of the full size data unit that was just written to.

In the case of a read request, the intelligence 307a repeats the same process described just above (except that no write data is included with the request). Upon receipt of its respective read request, each logical partition fetches the shard data identified by the base address ([XXX ... X]) and sends a read response to the requesting node 311 that identifies the read address and includes the read data shard.

The switching/routing core 313 directs the different read responses and their respective shards of read data along a same egress path (amongst multiple egress paths 315). Intelligence 307b snoops the egress traffic and recognizes (e.g., from table 314) that each response address corresponds to a sharded data unit (e.g., because each response address includes base address [XXX ... X]). The intelligence 307b queues all earlier arriving responses until the last response has been received. For example, if there are two partitions/shards, the intelligence queues the first response. By contrast, if there are four partitions/shards, the intelligence queues the first, second and third responses.

Regardless, once the last response is received, the intelligence merges the shards of read data to form a complete read response, clears the record of the in-flight request for the request's address from table 314 and sends the complete read response to the requesting CPU. Intelligence 307a,b can be implemented as dedicated/hardwire logic circuitry, programmable circuitry (e.g., field programmable gate array (FPGA) circuitry), circuitry that executes program code to perform the functions of the intelligence (e.g., embedded processor, embedded controller, etc.) or any combination of these. In at least some implementations, intelligence 307a and/or 307b is integrated into the functionality of a packet processing pipeline that includes multiple stages (e.g., a packet parse stage, a header info extraction stage, a flow ID stage, etc.) that concurrently operate on a different packet at each stage.

Referring back to Fig. 2, certain computing systems can be constructed to move data shards between memory 202 and storage 203. That is, data shards can be moved from storage 202 to memory 203, or, data shards can be moved from 203 to memory 202 (the CPU units are not a source or destination of the data movement).

Generally, the sending entity receives a command from one of the CPU units 201 to move data from one location to the other. The command identifies the read location of the source and the write location of the destination. For example, if data is to be moved from storage 203 to memory 202, one of the CPU units sends a command to the storage 203. The request identifies the address of the data to be read from storage 203 which storage uses to fetch the data. The request also identifies the address in memory 202 where the data is to be written. As such, storage 203 sends the just fetched data to the memory 202 with the write address that was embedded in the CPU request. Memory 202 then writes the data to the write address.

When the CPU sends the move request into the network 204 there are three possibilities: 1) the data in storage 203 has already been sharded but the data is not to be sharded when written in memory 202; 2) the data in storage 203 is not sharded but is to be sharded when written into memory; 3) the data in storage 203 has already been sharded and the data is to be sharded when written in memory 202.

With respect to case 1) (the data in storage 203 has already been sharded but the data is not to be sharded when written in memory 202), the network intelligence 207 on the CPU side recognizes (e.g., from table 314) that the address of the source of the move corresponds to sharded data in storage 203. The networking intelligence 207 on the CPU side derives the appropriate addresses of the different shards from the base address of the item in storage provided by the requesting CPU and updates table 314 to reflect the existence of an in-flight move request from sharded storage to non-sharded memory. The network intelligence 207 on the CPU side creates a separate move request with different source address in storage for each shard in storage 203 but with a same destination address in memory 202. Each move request also identifies the node within the network 204 within which network intelligence 207 is embedded.

The separate move requests are then sent over the network 204 to the separate storage units in storage 203 that store the different shards. The separate storage units that receive the separate move requests send their shards of data to the memory address that is specified in each move request. The identity of the node within the network 204 within which network intelligence 207 is embedded as well as the storage address of the source data is copied into each transmission. Because the shards of data are sent from storage 203 to a same memory address, a single instance of memory side network intelligence 221 that is responsible for the memory address receives all the shards, recognizes the need to merge them based on their storage source address (e.g., by referring to its local equivalent of table 314) and merges the shards into a full sized data unit. The full size data unit is then written into memory 203.

With respect to case 2) (the data in storage 203 is not sharded but is to be sharded when written into memory), upon receipt from a CPU of a move request that specifies a source address in non sharded storage 203 and a destination address in non sharded memory 202, network intelligence 207 on the CPU side updates table 314 to indicate that a move is in flight from non-sharded storage to sharded memory at the corresponding source and destination addresses provided in the CPU request. The network intelligence 207 on the CPU side then creates a move request that specifies the source address in storage 203 and the destination address in memory 202 that were provided in the original request sent by the requesting CPU. The move request also identifies the node in the network 204 within which network intelligence 207 is embedded.

The move request is then sent into the network 204. The storage unit that is storing the data receives the move request, reads the data and sends it into the network 204. Network intelligence 222 on the storage side intercepts the communication and recognizes (e.g., by checking into its equivalent of table 314) that the destination address in memory is a sharded memory address. The network intelligence 222 on the storage side then: 1) physically parses the data into different shards; 2) creates a number of move requests equal to the number of shards that each specify the source address of the data being moved out of storage 203 and a different, respective destination address in memory 202 (the destination address in memory for each shard can be derived from the destination memory address specified by the CPU according to a process that is the same as, or similar to, the process described above with respect to Figs. 4a,b); and, 3) sends the different move requests deeper into the network 204 with their respective shards of data and respective destination memory addresses. Different memory units in memory 202 receive their respective shards and store them in memory 202.

Each memory unit that stores a shard then sends an acknowledgment to the node on the CPU side that includes network side intelligence 207 (which was identified in the move request sent by the node to storage 203 and copied into the move requests sent from storage 203 to memory 202). The network intelligence 207 on the CPU side accumulates the acknowledgements. When all of the acknowledgements have been received for all of the shards, the network intelligence 207 on the CPU side issues a completion acknowledgement to the CPU that originally requested the move.

With respect to case 3) (the data in storage 203 has already been sharded and the data is to be sharded when written in memory 202), the network intelligence 207 on the CPU side recognizes (e.g., from table 314) that the address of the source of the move corresponds to sharded data in storage 203. The networking intelligence 207 on the CPU derives the appropriate addresses in storage 203 for the different shards (e.g., from the base address of the item in storage provided by the requesting CPU) and updates table 314 to reflect the existence of an in-flight move from sharded storage 203 to sharded memory 202. The network intelligence 207 on the CPU side then creates a separate move request for each shard stored in storage 203. Each move request specifies the destination memory address of the specified by the requesting CPU.

The different move requests are then sent to the different storage units in storage 203 that are storing the different shards. Each storage unit reads the shards and sends them into the network 204 along with the destination memory address. Each instance of storage side intelligence 222 that receives a shard as it enters the network 204 (e.g., two instances if two shards are stored in two storage partitions, four instances if four shards are stored in four partitions) recognize that the shards are directed to sharded memory for storage.

In a basic case, the number of shards in storage 203 is equal to the number of shards in memory 202 and shards sent from a particular partition in storage 203 are sent to a same partition in memory for storage (e.g., a first shard in storage partition "0" is stored in memory partition "0" and a second shard in storage partition "1" is stored in memory partition "1"). In this case, the instances of storage side network intelligence 222 that receive the outbound shards append their partition identifier to the destination address in memory and send into the network. The communications are received at the corresponding memory partitions and stored.

If the number of shards in storage is different than the number of shards in memory, the move operation can be accomplished by sending all the shards read from storage to a common point (e.g., an instance of CPU side network intelligence 207, storage side intelligence 222 or memory side intelligence 221). The common point receives all the shards, merges them into a full sized data unit and then divides again into the correct number of memory shards which are then sent back into the network 204 for storage into their correct partition in memory 202.

Data movements from memory 202 to storage 203 can be achieved by swapping the memory and memory side intelligence roles with the storage and storage side intelligence roles for the just above described storage 203 to memory 202 data movements.

Note that one or more storage side network intelligence instances (such as instance 222) can be embedded in a switch/router 311 like that of Fig. 3 but where the switch/router is at/near the edge of the network 204 that interfaces with storage 203. Similarly, one or more memory side network intelligence instances (such as instance 221) can be embedded in a switch/router 311 like that of Fig. 3 but where the switch/router is at/near the edge of the network 204 that interfaces with memory 202. Network intelligence instances 207, 221, 222 can be implemented with any of dedicated hardwired logic circuitry, programmable circuitry such as field programmable gate array (FPGA) circuitry, circuitry that executes program code (e.g., software and/or firmware) to effect the functionality of the network intelligence instance (e.g., embedded controller, embedded processor, etc.) or any combination of these.

Referring to Fig. 2, note that a single CPU unit ("CPU" in Fig. 2) is a unit of hardware that executes software program code and can include a single CPU processing core, a multicore CPU processor, a rack mountable unit having multiple multicore CPU processors, etc. Likewise, a memory unit ("M" in Fig. 2) can be a memory chip, a memory module (e.g., a dual in-line memory module (DIMM), stacked memory module, etc.), a rack mountable unit having multiple memory modules, etc. A storage unit ("S" in Fig. 2) can be a non-volatile memory chip (e.g., a flash chip), a solid state drive (SSD), a hard disk drive (HDD), a rack mountable unit containing multiple SSDs and/or HDDs, etc.

Memory is typically faster than storage and volatile (e.g., DRAM) whereas storage is typically slower than memory and non-volatile (e.g., NAND flash memory). Additionally, memory is typically byte addressable and is the memory that the CPU units directly execute their program code out of (new instructions to be imminently executed by a CPU are read from memory and data to imminently operated upon by a CPU's executing software are read from memory). Storage, by contrast, is an architecturally deeper repository that often includes instructions and/or data that currently executing software have little/no expectation of executing or using in the near term. Storage can also be used to store highly important data that is "committed" to storage so that it is not lost in case of a power failure.

Although embodiments above have stressed the existence of network intelligence 207, 221, 222 within the network 204 to offload sharding operations from the CPUs, in other implementations, the above described intelligence 207, 221, 222 is embedded within an infrastructure processing unit (IPU), e.g., within a data center, to similarly offload sharding processing tasks from the CPUs.

Here, a new high performance computing environment (e.g., data center) paradigm is emerging in which "infrastructure" tasks are offloaded from traditional general purpose "host" CPUs (where application software programs are executed) to an infrastructure processing unit (IPU), data processing unit (DPU) or smart networking interface card (SmartNIC), any/all of which are hereafter referred to as an IPU. As will be made more clear below, with an IPU offloading the sharding operations from the CPUs, the sharding operations can be viewed as being performed just outside the network rather than just inside the network as described above with respect to Figs. 1 through 4a,b.

Networked based computer services, such as those provided by cloud services and/or large enterprise data centers, commonly execute application software programs for remote clients. Here, the application software programs typically execute a specific (e.g., "business") end-function (e.g., customer servicing, purchasing, supply-chain management, email, etc.). Remote clients invoke/use these applications through temporary network sessions/connections that are established by the data center between the clients and the applications.

In order to support the network sessions and/or the applications' functionality, however, certain underlying computationally intensive and/or trafficking intensive functions ("infrastructure" functions) are performed.

Examples of infrastructure functions include encryption/decryption for secure network connections, compression/decompression for smaller footprint data storage and/or network communications, virtual networking between clients and applications and/or between applications, packet processing, ingress/egress queuing of the networking traffic between clients and applications and/or between applications, ingress/egress queueing of the command/response traffic between the applications and mass storage devices, error checking (including checksum calculations to ensure data integrity), distributed computing remote memory access functions, etc.

Traditionally, these infrastructure functions have been performed by the CPU units "beneath" their end-function applications. However, the intensity of the infrastructure functions has begun to affect the ability of the CPUs to perform their end-function applications in a timely manner relative to the expectations of the clients, and/or, perform their end-functions in a power efficient manner relative to the expectations of data center operators. Moreover, the CPUs, which are typically complex instruction set (CISC) processors, are better utilized executing the processes of a wide variety of different application software programs than the more mundane and/or more focused infrastructure processes.

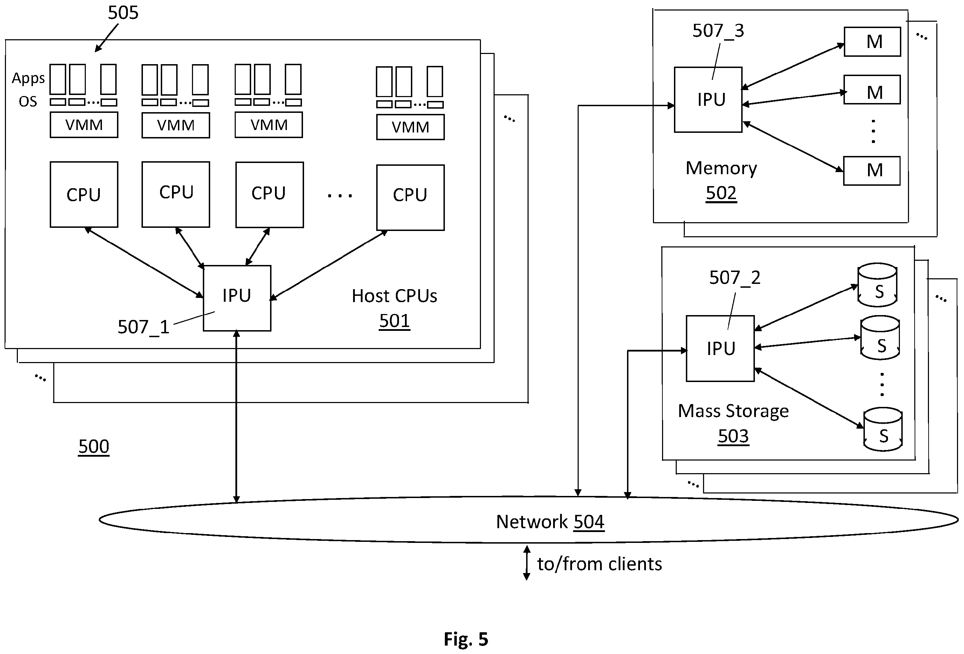

As such, as observed in Fig. 5, the infrastructure functions are being migrated to an infrastructure processing unit. Fig. 5 depicts an exemplary data center environment 500 that integrates IPUs 507 to offload infrastructure functions from the host CPUs 404 as described above.

As observed in Fig. 5, the exemplary data center environment 500 includes pools 501 of CPU units that execute the end-function application software programs 505 that are typically invoked by remotely calling clients. The data center also includes separate memory pools 502 and mass storage pools 405 to assist the executing applications.

The CPU, memory storage and mass storage pools 501, 502, 503 are respectively coupled by one or more networks 504. Notably, each pool 501, 502, 503 has an IPU 507_1, 507_2, 507_3 on its front end or network side. Here, each IPU 507 performs pre-configured infrastructure functions on the inbound (request) packets it receives from the network 504 before delivering the requests to its respective pool's end function (e.g., executing software in the case of the CPU pool 501, memory in the case of memory pool 502 and storage in the case of mass storage pool 503). As the end functions send certain communications into the network 504, the IPU 507 performs pre-configured infrastructure functions on the outbound communications before transmitting them into the network 504.

Here, each IPU 507 can be configured to implement the sharding functionality described above for the instances network side intelligence 207, 221, 222. Specifically, IPU 507_1 performs the CPU sharding intelligence functions described above for CPU side intelligence 207; IPU 507_2 performs the memory side sharding intelligence functions described above for memory side intelligence 221; and, IPU 507_3 performs the storage side intelligence functions described above for storage side intelligence 222. Notably, however, each IPU resides between its end function unit (CPU, memory (M) or storage (S)) and the network 504 rather than being within the network 504. The table 314 of Fig. 3 can be implemented with memory that is on the IPU and/or memory that is coupled to the IPU.

Depending on implementation, one or more CPU pools 501, memory pools 502, and mass storage pools 503 and network 504 can exist within a single chassis, e.g., as a traditional rack mounted computing system (e.g., server computer). In a disaggregated computing system implementation, one or more CPU pools 501, memory pools 502, and mass storage pools 503 are separate rack mountable units (e.g., rack mountable CPU units, rack mountable memory units (M), rack mountable mass storage units (S)).

In various embodiments, the software platform on which the applications 505 are executed include a virtual machine monitor (VMM), or hypervisor, that instantiates multiple virtual machines (VMs). Operating system (OS) instances respectively execute on the VMs and the applications execute on the OS instances. Alternatively or combined, container engines (e.g., Kubernetes container engines) respectively execute on the OS instances. The container engines provide virtualized OS instances and containers respectively execute on the virtualized OS instances. The containers provide isolated execution environment for a suite of applications which can include, applications for micro-services. The same software platform can execute on the CPU units 201 of Fig. 2.

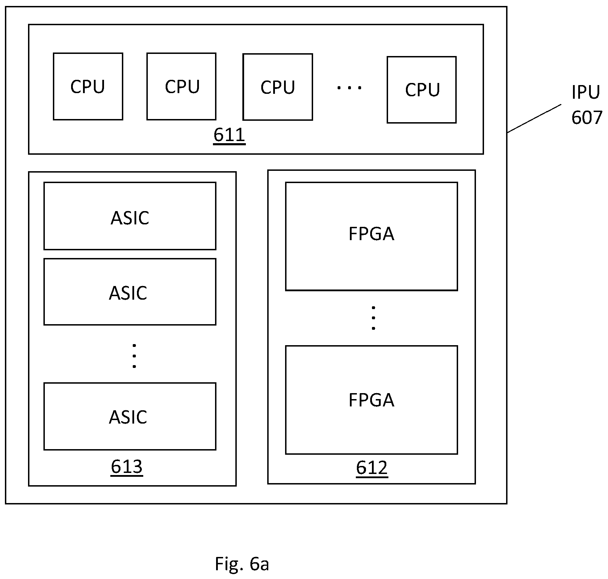

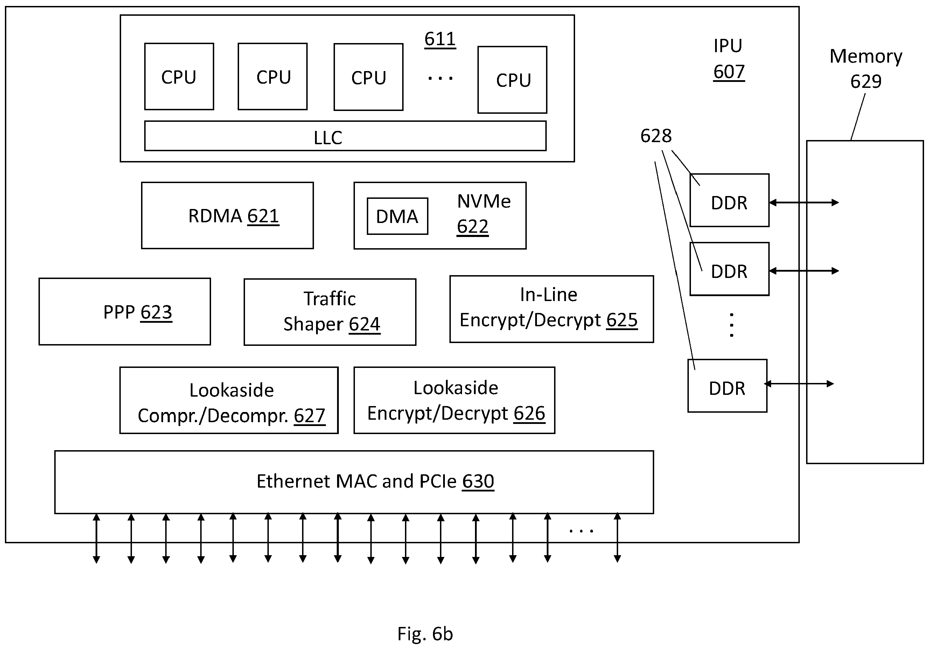

Fig. 6a shows an exemplary IPU 607. As observed in Fig. 6 the IPU 609 includes a plurality of general purpose processing cores 611, one or more field programmable gate arrays (FPGAs) 612 and one or more acceleration hardware (ASIC) blocks 613. An IPU typically has at least one associated machine readable medium to store software that is to execute on the processing cores 611 and firmware to program the FPGAs so that the processing cores 611 and FPGAs 612 can perform their intended functions.

The processing cores 611, FPGAs 612 and ASIC blocks 613 represent different tradeoffs between versatility/programmability, computational performance and power consumption. Generally, a task can be performed faster in an ASIC block and with minimal power consumption, however, an ASIC block is a fixed function unit that can only perform the functions its electronic circuitry has been specifically designed to perform.

The general purpose processing cores 611, by contrast, will perform their tasks slower and with more power consumption but can be programmed to perform a wide variety of different functions (via the execution of software programs). Here, it is notable that although the processing cores can be general purpose CPUs like the data center's host CPUs 501, in many instances the IPU's general purpose processors 511 are reduced instruction set (RISC) processors rather than CISC processors (which the host CPUs 501 are typically implemented with). That is, the host CPUs 501 that execute the data center's application software programs 505 tend to be CISC based processors because of the extremely wide variety of different tasks that the data center's application software could be programmed to perform (with respect to Fig. 2, CPU units 201 are also typically general purpose CISC processors).

By contrast, the infrastructure functions performed by the IPUs tend to be a more limited set of functions that are better served with a RISC processor. As such, the IPU's RISC processors 611 should perform the infrastructure functions with less power consumption than CISC processors but without significant loss of performance.

The FPGA(s) 612 provide for more programming capability than an ASIC block but less programming capability than the general purpose cores 611, while, at the same time, providing for more processing performance capability than the general purpose cores 611 but less than processing performing capability than an ASIC block.

Fig. 6b shows a more specific embodiment of an IPU 607. For ease of explanation the IPU 607 of Fig. 6b does not include any FPGA blocks. As observed in Fig. 6b the IPU 607 includes a plurality of general purpose cores (e.g., RISC) 611 and a last level caching layer for the general purpose cores 611. The IPU 607 also includes a number of hardware ASIC acceleration blocks including: 1) an RDMA acceleration ASIC block 621 that performs RDMA protocol operations in hardware; 2) an NVMe acceleration ASIC block 622 that performs NVMe protocol operations in hardware; 3) a packet processing pipeline ASIC block 623 that parses ingress packet header content, e.g., to assign flows to the ingress packets, perform network address translation, etc.; 4) a traffic shaper 624 to assign ingress packets to appropriate queues for subsequent processing by the IPU 509; 5) an in-line cryptographic ASIC block 625 that performs decryption on ingress packets and encryption on egress packets; 6) a lookaside cryptographic ASIC block 626 that performs encryption/decryption on blocks of data, e.g., as requested by a host CPU 501; 7) a lookaside compression ASIC block 627 that performs compression/decompression on blocks of data, e.g., as requested by a host CPU 501; 8) checksum/cyclic-redundancy-check (CRC) calculations (e.g., for NVMe/TCP data digests and/or NVMe DIF/DIX data integrity); 9) thread local storage (TLS) processes; etc.

The IPU 507 also includes multiple memory channel interfaces 628 to couple to external memory 629 that is used to store instructions for the general purpose cores 511 and input/output data for the IPU cores 511 and each of the ASIC blocks 621 - 626. The IPU includes multiple PCIe physical interfaces and an Ethernet Media Access Control block 630 to implement network connectivity to/from the IPU 609. As mentioned above, the IPU 607 can be a semiconductor chip, or, a plurality of semiconductor chips integrated on a module or card (e.g., a NIC).

The sharding embodiments described above, whether performed within a network or by an IPU, can be executed beneath any higher lever multiprocessor protocol that effects cache coherency, memory consistency or otherwise attempts to maintain consistent/coherent data in memory and/or storage in a multiprocessor system (including aggregated as well as disaggregated systems) where, e.g., more than one processor can read a same data item. The sharding activity should therefore be transpart to these protocols. Such protocols are believed to be incorporated into Compute Express Link (CXL) as articulated by specifications promulgated by the CXL Consortium, Gen-Z as articulated by specifications promulgated by the Gen-Z Consortium, OpenCAPI as articulated by specifications promulgated by IBM and/or the OpenCAPI Consortium, CCIX by Xilinx, NVLink/NVSwitch by Nvidia, HyperTransport and/or Infinity Fabric by Advanced Micro Devices (AMD) among others.

Embodiments of the invention may include various processes as set forth above. The processes may be embodied in program code (e.g., machine-executable instructions). The program code, when processed, causes a general-purpose or special-purpose processor to perform the program code's processes. Alternatively, these processes may be performed by specific/custom hardware components that contain hard wired interconnected logic circuitry (e.g., application specific integrated circuit (ASIC) logic circuitry) or programmable logic circuitry (e.g., field programmable gate array (FPGA) logic circuitry, programmable logic device (PLD) logic circuitry) for performing the processes, or by any combination of program code and logic circuitry.

Elements of the present invention may also be provided as a machine-readable medium for storing the program code. The machine-readable medium can include, but is not limited to, floppy diskettes, optical disks, CD-ROMs, and magneto-optical disks, FLASH memory, ROMs, RAMs, EPROMs, EEPROMs, magnetic or optical cards or other type of media/machine-readable medium suitable for storing electronic instructions.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. An apparatus comprising, comprising:
an ingress path to receive a memory and/or storage access request generated by a central processing unit (CPU);
an egress path to direct a response to the access request to the CPU;
circuitry coupled to the ingress path and the egress path, the circuitry to divide the access request into multiple access requests and direct the multiple access requests toward a network, the circuitry to receive respective multiple responses to the multiple access requests and construct the response.

2. The apparatus of claim 1 wherein the logic circuitry is to refer to information that defines which memory and/or storage addresses are to have their memory and/or storage access requests divided.

3. The apparatus of claim 2 wherein the information is to be stored in memory that is coupled to the logic circuitry.

4. The apparatus of claim 1 or 2 wherein the logic circuitry is to construct an in flight record for the multiple access requests.

5. The apparatus of claim 4 wherein the logic circuitry is to delete the record as a consequence of the respective multiple responses having been received.

6. The apparatus of claim 1 or 4 wherein, if the memory and/or storage access request is a write request, the logic circuitry is to manipulate the address of the write request to generate a different, unique address for each of the multiple access requests.

7. The apparatus of claim 1 or 4 wherein, if the memory and/or storage access request is a read request, the logic circuitry is to receive portions of read data with the respective multiple responses and combine the portions of data into complete read data.

8. An infrastructure processing unit, comprising:
a) a processing core;
b) an ASIC block and/or a field programmable gate array (FPGA);
c) at least one machine readable medium having software to execute on the processing core and/or firmware to program the FPGA;
wherein, logic associated with the processing core and software, ASIC block, and/or FPGA and firmware is to perform i) through vi) below:
i) receive a memory and/or storage access request generated by a central processing unit (CPU);
ii) divide the access request into multiple access requests;
iii) direct the multiple access requests to a network;
iv) receive respective multiple responses to the multiple access requests that were sent to the IPU from the network;
v) construct a response to the access request from the respective multiple responses; and
vi) send the response to the CPU.

9. The infrastructure processing unit of claim 8 wherein the logic is to refer to information that defines which memory and/or storage addresses are to have their memory and/or storage access requests divided.

10. The infrastructure processing unit of claim 9 wherein the information is to be stored in memory that is coupled to the IPU.

11. The infrastructure processing unit of claim 8 or 10 wherein the logic is to construct an in flight record for the multiple access requests.

12. The infrastructure processing unit of claim 11 wherein the logic is to delete the record as a consequence of the respective multiple responses having been received.

13. The infrastructure processing unit of claim 8 or 11 wherein, if the memory and/or storage access request is a write request, the logic is to manipulate the address of the write request to generate a different, unique address for each of the multiple access requests.

14. The infrastructure processing unit of claim 8 or 11 wherein, if the memory and/or storage access request is a read request, the logic is to receive portions of read data with the respective multiple responses and combine the portions of data into complete read data.

15. A computing system, comprising the subject matter of any of claims 1 through 14.
